Europäisches Patentamt

European Patent Office

Office européen des brevets

(11) Numéro de publication: **0 065 886**

**A1**

## (12) DEMANDE DE BREVET EUROPEEN

(21) Numéro de dépôt: **82400589.6**

(22) Date de dépôt: **31.03.82**

(51) Int. Cl.³: **B 29 C 27/20**
**B 29 C 27/16, F 16 L 58/10**

(30) Priorité: **13.04.81 FR 8107346**

(43) Date de publication de la demande:
**01.12.82 Bulletin 82/48**

(84) Etats contractants désignés:
**AT BE CH DE GB IT LI LU NL SE**

(71) Demandeur: **Laurent, Jacques**
**24 Rue Bicquilley**
**F-54200 Toul(FR)**

(72) Inventeur: **Laurent, Jacques**
**24 Rue Bicquilley**
**F-54200 Toul(FR)**

(74) Mandataire: **Bressand, Georges et al,**
**c/o CABINET LAVOIX 2 Place d'Estienne d'Orves**
**F-75441 Paris Cedex 09(FR)**

(54) **Procédé pour chemiser intérieurement des canalisations et tube pour sa mise en oeuvre.**

(57) L'invention a pour objet un procédé pour chemiser intérieurement des canalisations (2), caractérisé en ce que

a - on fabrique un tube cylindrique (1) en matériau thermoplastique doué d'une mémoire élastique activable au-dessus de la température ambiante, ayant un diamètre extérieur au moins égal au diamètre intérieur de la canalisation à chemiser;

b - on déforme latéralement le tube (1) ainsi obtenu à une température au moins égale à la température d'activation de la mémoire, de façon à réduire la section apparente du tube et à amener la plus grande dimension de cette section à une valeur inférieure au diamètre intérieur de la canalisation à chemiser, et on le fige dans cet état déformé par refroidissement;

c - on enfile le tube (1) ainsi déformé dans la canalisation à chemiser; et

d - on chauffe le tube (1) déformé à une température au moins égale à la température d'activation de la mémoire, de façon à ce qu'il reprenne sa forme cylindrique initiale et vienne se plaquer contre la paroi de la canalisation (2).

**FIG. 2**

1.

Procédé pour chemiser intérieurement des
canalisations et tube pour sa mise en oeuvre.-

La présente invention concerne un procédé pour
chemiser intérieurement des canalisations.

Le chemisage intérieur ou "relining" de canalisations défectueuses avec des tubes en polymère a fait
ses preuves comme procédé économique dans de nombreux
cas de rénovation.

Ce procédé est applicable aux canalisations industrielles de produits corrosifs, d'huiles, de gaz, de
pétroles bruts, d'eaux résiduaires, etc. L'ancienne
canalisation reste en place et sert de fourreau extérieur
au tube introduit.

Dans les opérations de chemisage effectuées jusqu'à présent, il reste toujours un espace annulaire
entre le tube introduit et la canalisation à chemiser,
ce qui a deux conséquences néfastes :

- réduction importante du diamètre, donc pertes
de charges accrues;

- l'espace annulaire doit être rempli par un
coulis de béton ou un autre produit pour éviter les
ennuis de dilatation en particulier, ce qui a pour conséquence de  limiter les longueurs possibles du chemisage
par opération.

Aussi, en pratique, chaque opération ne peut pas
porter sur des longueurs supérieures à 400 m. De plus,
un tel chemisage ne peut pas être effectué sur des canalisations de petit diamètre.

Le but de ce nouveau procédé est de réaliser un
chemisage en minimisant au maximum la perte de diamètre
utile , d'une part, et en maximisant les longueurs de
chemisage par opération.

A cet effet, la présente invention a pour objet
un procédé pour chemiser intérieurement des canalisations, caractérisé en ce que

a - on fabrique un tube cylindrique en matériau
thermoplastique doué d'une mémoire élastique activable au-dessus de la température ambiante, ayant un diamètre extérieur au moins égal au diamètre intérieur de la canalisation à chemiser;

b - on déforme latéralement le tube ainsi obtenu à une température au moins égale à la température d'activation de la mémoire, de façon à réduire la section apparente du tube et à amener la plus grande dimension de cette section à une valeur inférieure au diamètre intérieur de la canalisation à chemiser, et on le fige dans cet état déformé par refroidissement;

c - on enfile le tube ainsi déformé dans la canalisation à chemiser; et

d - on chauffe le tube déformé à une température au moins égale à la température d'activation de la mémoire de façon à ce qu'il reprenne sa forme cylindrique initiale et vienne se plaquer contre la paroi de la canalisation.

Ainsi, selon une caractéristique essentielle de la présente invention, on utilise pour constituer le tube de chemisage un matériau thermoplastique à mémoire élastique.

De tels matériaux peuvent être déformés mécaniquement à une température au moins égale à la température d'activation de la mémoire et être figés dans leur état déformé par refroidissement. Ces matériaux tendent à reprendre leur forme et leurs dimensions initiales lorsqu'on les porte à nouveau à une température au moins égale à la température d'activation de la mémoire.

Comme matériaux utilisables, on peut mentionner les polymères cristallins, par exemple le polyéthylène; les copolymères de l'éthylène avec d'autres monomères à insaturation éthylénique, comme les copolymères de l'éthylène et de l'acétate de vinyle ou de l'éthylène et de l'acrylate d'éthyle; les ionomères comme un polychlorure de vinyle, un polyfluorure de vinylidène, le polytétrafluoréthylène ou un copolymère du fluorure de vinyle et l'hexafluoropropylène. Ces polymères sont, de préférence, réticulés. En outre, il est possible d'utiliser des matières élastomères, par exemple des polyuréthannes thermoplastiques réticulés, du caoutchouc nitrile, des copolymères d'éthylène et de propylène et des élastomères fluorés, modifiés si nécessaire pour leur permettre de reprendre leur forme sous l'effet de la chaleur.

Ces matériaux peuvent être réticulés de manière classique par voie chimique ou par un rayonnement à haute énergie.

Le tube utilisé dans la présente invention peut être fabriqué par extrusion d'une matière thermoplastique appropriée et réticulation de la matière thermoplastique après extrusion.

Comme indiqué précédemment, le tube extrudé a un diamètre au moins égal au diamètre intérieur de la canalisation à chemiser. Son épaisseur peut être faible, c'est-à-dire qu'elle peut descendre jusqu'à 3 % ou même moins du diamètre de la canalisation à chemiser.

Le tube ainsi obtenu peut être déformé à chaud, puis figé dans son état déformé par tout moyen approprié, par exemple par passage dans une filière froide, par des galets ou encore par mise sous vide.

Toutes les formes de déformation permettant de retrouver, après relâchement des contraintes, le diamètre initial du tube sont possibles.

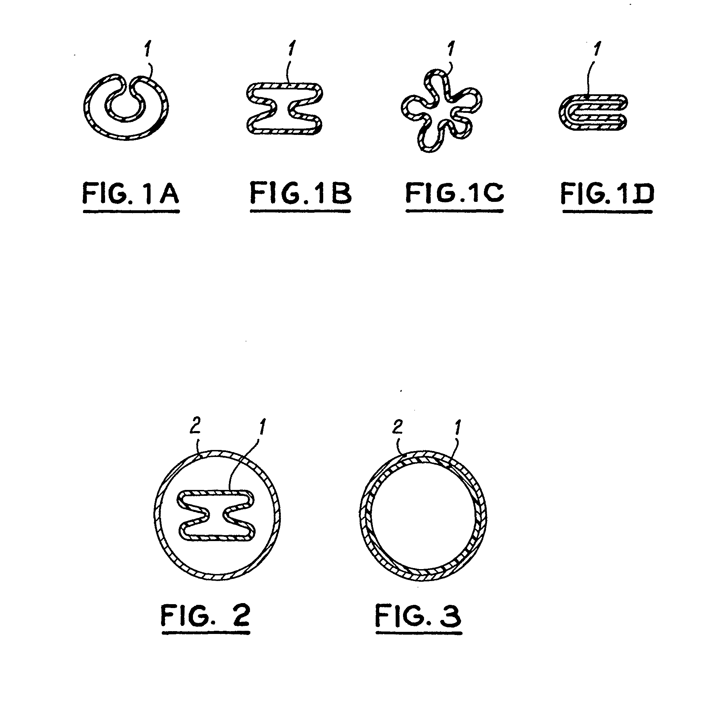

On a représenté sur les Fig. 1A, 1B, 1C, 1D, quatre formes différentes de sections de tubes 1 déformés, respectivement en forme de croissant, en forme de H, en forme d'étoile et en forme de U.

La section en étoile peut être obtenue par des galets ou passage dans une filière froide, ainsi que la section en forme de H. Les sections en forme de croissant et de U peuvent être obtenues par mise sous vide et écrasement, par exemple entre deux rouleaux.

Les formes aplaties en H ou U sont préférées car elles ont l'avantage de s'enrouler plus facilement sur des bobines, tout en ayant un encombrement moindre.

Pour effectuer le chemisage, on enfile le tube ainsi déformé dans la canalisation à chemiser. Ceci peut être réalisé à l'aide d'un câble que l'on a précédemment enfilé à l'aide d'un piston.

On a représenté sur la Fig. 2, en coupe transversale, une canalisation 2 dans laquelle on a enfilé un tube 1 déformé ayant une forme aplatie en H, comme représenté sur la Fig. 1B.

Pour que le tube déformé reprenne sa forme cylindrique et vienne se plaquer contre la paroi de la canalisation, on le chauffe à une température au moins égale à la température d'activation de la mémoire, notamment à l'aide d'un fluide chaud que l'on fait passer dans le tube, par exemple de l'eau chaude, de la vapeur d'eau ou de l'air chaud.

On a représenté sur la Fig. 3, en coupe transversale, la canalisation 2 contre laquelle e s t appliqué le tube 1 après chauffage.

A titre d'exemple, pour chemiser une canalisation d'un diamètre intérieur de 100 mm, on fabrique un tube cylindrique en polyéthylène à haute densité et à haut poids moléculaire réticulé au silane par le procédé Dow Corning, ayant un diamètre extérieur de 102 mm et un diamètre intérieur de 99 mm. Le matériau constituant le tube a une température de déformation ou d'activation de la mémoire élastique de 135°C.

On chauffe ce tube à une température de 140°C et on le déforme en le faisant passer dans une filière froide pour lui conférer une forme aplatie en U.

On introduit dans la canalisation à chemiser de 1000 m de long un câble et on tire le tube à l'aide du câble.

On envoie ensuite dans le tube à mémoire de la vapeur d'eau sous pression à 140°C. Le tube à mémoire reprend sa forme cylindrique et vient s'appliquer contre la paroi de la canalisation.

Les avantages du procédé selon l'invention sont les suivants:

- possibilité de pouvoir faire du chemisage sur de grandes longueurs (2000 m par exemple), grâce à la grosse différence entre le diamètre circonscrit du tube formé par rapport au diamètre intérieur de la canalisation;

- placage du tube interne contre la paroi de la canalisation;

- possibilité de faire du chemisage sur de petits diamètres;

- pertes de charges supplémentaires minimes, étant donné que le diamètre est peu diminué (3 %);

- surface interne plus lisse compensant les pertes de charges dues à la réduction du diamètre;

- temps d'intervention plus faible que pour la pose d'une canalisation neuve;

- tenue à la corrosion nettement améliorée;

- élimination des défauts de soudure ou de jonction sur la canalisation.

REVENDICATIONS

1. Procédé pour chemiser intérieurement des canalisations, caractérisé en ce que

a - on fabrique un tube cylindrique en matériau thermoplastique constitué par un polymère réticulé, doué d'une mémoire élastique activable au-dessus de la température ambiante, ayant un diamètre extérieur au moins égal au diamètre intérieur de la canalisation à chemiser;

b - on déforme latéralement le tube ainsi obtenu à une température au moins égale à la température d'activation de la mémoire, de façon à réduire la section apparente du tube et à amener la plus grande dimension de cette section à une valeur inférieure au diamètre intérieur de la canalisation à chemiser, et on le fige dans cet état déformé par refroidissement;

c - on enfile le tube ainsi déformé dans la canalisation à chemiser; et

d - on chauffe le tube déformé à une température au moins égale à la température d'activation de la mémoire, de façon à ce qu'il reprenne sa forme cylindrique initiale et vienne se plaquer contre la paroi de la canalisation.

2. Procédé selon la revendication 1, caractérisé en ce que l'on utilise comme matériau du polyéthylène réticulé.

3. Procédé selon la revendication 1, caractérisé en ce qu'au stade (b) on confère au tube une section aplatie.

4. Procédé selon la revendication 3, caractérisé en ce qu'au stade (b) on confère au tube une section en forme de H ou de U.

5. Procédé selon l'une quelconque des revendications 1 à 4, caractérisé en ce qu'au stade (d) on effectue le chauffage du tube par envoi d'un fluide chaud à l'intérieur du tube.

6. Tube destiné à la mise en oeuvre d'un procédé de chemisage selon la revendication 1, caractérisé en ce qu'il est constitué d'un tube cylindrique en matériau thermoplastique constitué par un polymère réticulé, doué d'une mémoire élastique activable au-dessus de la température ambiante, que l'on a déformé latéralement de façon à réduire sa section apparente.

FIG.1A

FIG.1B

FIG.1C

FIG.1D

FIG. 2

FIG. 3

Office européen
des brevets

**RAPPORT DE RECHERCHE EUROPEENNE**

Numéro de la demande

EP 82 40 0589

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | FR-A-1 394 807 (PONT-A-MOUSSON) <br><br> * figures; page 1, colonne de gauche, lignes 10-39; page 2, colonne de droite, lignes 35-39; page 3, colonne de gauche, lignes 12-27 * | 1,3,5, 6 | B 29 C 27/20 <br> B 29 C 27/16 <br> F 16 L 58/10 |
| | --- | | |
| X,Y | CH-A- 466 560 (RAYCHEM) <br> * figure 3; colonne 7, lignes 14,19 * | 1-3,6 | |
| | --- | | |
| X,Y | DE-A-1 941 327 (RAYCHEM) <br> * page 6, lignes 6-11; lignes 25-28 * | 1,2,6 | |
| | --- | | |
| X,Y | FR-A-1 194 226 (TUBOUIT) <br> * figures; résumé point 1,2n * | 1,4-6 | **DOMAINES TECHNIQUES RECHERCHES (Int. Cl. 3)** |
| | --- | | |
| X,Y | FR-A-1 201 451 (TUBOUIT) <br> * en entier * | 1,5,6 | B 29 C <br> F 16 L |
| | --- | | |
| X,Y | BE-A- 682 774 (CARBONE-LORRAINE) <br> * revendications * | 1 | |
| | --- | | |
| Y | GB-A-2 003 576 (TRIO ENGINEERING) <br> * figures * | 4 | |
| | --- | | |

Le présent rapport de recherche a été établi pour toutes les revendications

| Lieu de la recherche <br> LA HAYE | Date d'achèvement de la recherche <br> 21-07-1982 | Examinateur <br> CORDENIER J. |
|---|---|---|

**0065886**

Office européen
des brevets

**RAPPORT DE RECHERCHE EUROPEENNE**

Numéro de la demande

EP   82  40  0589

| | DOCUMENTS CONSIDERES COMME PERTINENTS | | Page  2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 316 528  (A/S DEN NORSKE REM FABRIK) <br> * figures * | 4 | |
| Y | GB-A-1 352 829  (RALPH ROSS) <br> * figures * | 4 | |
| Y | US-A-3 429 954  (ATKINS) <br> * revendications * | 2 | |
| A | FR-A-2 135 657  (RAYCHEM) <br> *  revendication  15;  page  1, lignes 33-37 * | 2 | |

**DOMAINES TECHNIQUES RECHERCHES (Int. Cl. ³)**

Le présent rapport de recherche a été établi pour toutes les revendications

| Lieu de la recherche <br> LA HAYE | Date d'achèvement de la recherche <br> 21-07-1982 | Examinateur <br> CORDENIER J. |
|---|---|---|

CATEGORIE DES DOCUMENTS CITES

X :  particulièrement pertinent à lui seul
Y :  particulièrement pertinent en combinaison avec un
      autre document de la même catégorie
A :  arrière-plan technologique
O :  divulgation non-écrite
P :  document intercalaire

T :  théorie ou principe à la base de l'invention
E :  document de brevet antérieur, mais publié à la
      date de dépôt ou après cette date
D :  cité dans la demande
L :  cité pour d'autres raisons

& :  membre de la même famille, document correspondant

OEB Form 1503 03.82